Europäisches Patentamt

European Patent Office

Office européen des brevets

(11) Numéro de publication: **0 375 004**
**A1**

## (12) DEMANDE DE BREVET EUROPEEN

(21) Numéro de dépôt: 89203079.2

(22) Date de dépôt: 05.12.89

(51) Int. Cl.5: **B01D 69/08, D01D 5/24**

(30) Priorité: **22.12.88 FR 8817370**

(43) Date de publication de la demande:
**27.06.90 Bulletin 90/26**

(84) Etats contractants désignés:
**AT BE CH DE ES FR GB GR IT LI LU NL SE**

(71) Demandeur: **LYONNAISE DES EAUX Société Anonyme**
**52 rue de Lisbonne**
**F-75008 Paris(FR)**

(72) Inventeur: **Aptel, Philippe**
**22 rue J. Strauss**
**F-31400 Toulouse(FR)**
Inventeur: **Espenan, Jean-Michel**
**Résidence La Bigorre Bâtiment B2 Rue de Touraine**
**F-31100 Toulouse(FR)**

(74) Mandataire: **Barre, Philippe**
**Cabinet Barre-Gatti-Laforgue 95 rue des Amidonniers**
**F-31069 Toulouse Cédex(FR)**

(54) **Procédé pour la fabrication d'un matériau poreux organique, notamment d'une membrane semi-perméable organique, comportant une pluralité de canaux longitudinaux séparés.**

(57) L'invention concerne un procédé pour la fabrication d'un matériau poreux organique, notamment d'une membrane semi-perméable organique, doté d'une pluralité de canaux séparés, consistant à dissoudre un polymère dans un solvant, à utiliser une filière comportant, d'une part, des aiguilles de formes conjuguées de celles des canaux et de dimensions externes comprises entre 0,7 fois et 1,2 fois celles desdits canaux et, d'autre part, un orifice d'extrusion de forme conjuguée de celle de l'extrudat et de dimensions internes comprises entre 0,8 fois et 1,2 fois celles dudit extrudat, à injecter autour des aiguilles une solution présentant une viscosité supérieure à 500 millipascal.seconde, à introduire à l'intérieur des conduits de la filière un fluide de centrage non solvant à l'égard du polymère et apte à précipiter la solution polymérique, à faire parcourir à l'extrudat en sortie de filière, une distance da dans une atmosphère gazeuse non précipitante à l'égard de la solution polymérique avec da telle que : 500 x e < da < 0,8 m , (e représentant la distance maximale à parcourir par le fluide précipitant pour obtenir la précipitation totale dudit extrudat), à recueillir l'extrudat dans un bain de liquide précipitant la solution polymérique, et à envider l'extrudat précipité avec une vitesse d'envidage linéaire Ve telle que Ve/Vs < 1,2, Vs étant la vitesse d'extrusion moyenne.

Fig. 1

## PROCEDE POUR LA FABRICATION D'UN MATERIAU POREUX ORGANIQUE, NOTAMMENT D'UNE MEMBRANE SEMI-PERMEABLE ORGANIQUE, COMPORTANT UNE PLURALITE DE CANAUX LONGITUDINAUX SEPARES

L'invention concerne un procédé pour la fabrication d'un matériau poreux organique, notamment d'une membrane semi-perméable organique, comportant une pluralité de canaux longitudinaux séparés, procédé du type consistant à dissoudre un polymère dans un solvant, à extruder la solution obtenue au travers d'une filière dotée d'une pluralité de conduits séparés à l'intérieur desquels on introduit un fluide, dit de centrage, et à l'extérieur desquels on fait s'écouler la solution, et, enfin, à précipiter l'extrudat obtenu.

Les membranes semi-perméables organiques dotées d'une pluralité de canaux longitudinaux séparés présentent d'importants avantages par rapport aux fibres creuses classiques. En effet, elles présentent une grande résistance mécanique qui simplifie notablement les problèmes de manipulation. De plus, les vitesses de production sont accélérées du fait qu'une longueur inférieure de membrane est nécessaire pour la réalisation d'un faisceau. Enfin, la réalisation des modules de filtration se trouve notablement simplifiée. De tels avantages ont conduit à un développement de l'emploi de ces membranes dont des techniques de fabrication ou des applications sont notamment décrites dans les brevets DE-A-3022313, WO-A-8102750, FR-A-2445163 et JP-A-5982.906. Toutefois, les techniques connues et notamment celles décrites dans ces brevets ne permettent pas de maîtriser de façon rationnelle tous les paramètres de fabrication des membranes et notamment de conférer à celles-ci des structures particulières prédéfinies et de maîtriser de façon très précise les dimensions externes de ces membranes ainsi que la section de leurs canaux.

La présente invention vise à combler ces lacunes et a pour principal objectif de fournir un procédé permettant de réaliser des membranes présentant une structure particulière bien définie et dont les dimensions, ainsi que celle de leurs canaux, sont parfaitement définies.

A cet effet, l'invention vise un procédé se caractérisant en ce que :

. on utilise un filière comportant, d'une part, des aiguilles de formes conjuguées de cells des canaux et de dimensions externes comprises entre 0,7 fois et 1,2 fois celles des dits canaux et, d'autre part, un orifice d'extrusion de forme conjuguée de celle de l'extrudat et de dimensions internes comprises entre 0,8 fois et 1,2 fois celles dudit extrudat,

. on dispose la filière de façon à extruder la solution sensiblement verticalement,

. on injecte autour des aiguilles une solution présentant vue viscosité supérieure à 500 millipascal seconde ("Contraves", Rhéomat 115, taux de cisaillement de 28 $s^{-1}$) avec un débit adapté de façon à obtenir une vitesse d'extrusion moyenne Vs en sortie de filière,

. on introduit à l'intérieur des conduits de la filière un fluide de centrage non solvant à l'égard du polymère et apte à précipiter la solution polymérique,

. on fait parcourir à l'extrudat en sortie de filière une distance da dans une atmosphère gazeuse non précipitante à l'égard de la solution polymérique avec da telle que : $500 \times e \preceq da < 0,8 \, m$ , où e représente la distance maximale à parcourir par le fluide précipitant à l'intérieur de l'extrudat pour obtenir la précipitation totale du dit extrudat,

. on recueille l'extrudat dans un bain de liquid non solvant à l'égard du polymère et apte à précipiter la solution polymérique,

. et on envide l'extrudat précipité avec une vitesse d'envidage linéaire Ve telle que Ve/Vs < 1,2.

Ce procédé permet de réaliser des membranes comprenant une pluralité de canaux longitudinaux séparés s'étendant au travers d'une matière polymérique composée de couches actives semi-perméables à la surface de chaque canal et d'une épaisseur intermédiaire de porosité supérieure à celle des dites couches actives.

L'intérêt de telles membranes réside dans le fait que les couches actives constituent un écran de filtration évitant que la filtration se fasse en profondeur dans la matière polymérique et par là-même que les membranes ne se saturent irréversiblement.

De plus, la présence de ces couches actives à la surface des canaux est particulièrement adaptée pour permettre la filtration de fluides chargés s'écoulant dans ces canaux, en raison de l'absence de zones mortes où s'accumulerait le gateau de filtration. Enfin, en raison de leur modularité, les canaux offrent de l'un à l'autre les mêmes conditions de traitement et permettent donc de dominer parfaitement les paramètres de la filtration.

Par ailleurs, toutes les conditions opératoires mises en oeuvre dans ce procédé sont adaptées pour obtenir la précipitation totale de la matière polymérique avant de recueillir l'extrudat dans le bain de liquid non solvant, et, par conséquent, obtenir la structure ci-dessus citée, tout en contrôlant parfaitement les phénomènes d'étirement de cet extrudat que conditionnent les dimensions externes de la membrane ainsi que celles des canaux.

Selon un mode de mise en oeuvre préférentiel, on utilise une filière comportant un orifice d'extrusion présentant une surface périmétrique de forme ondulée constituée d'une succession d'ondulations en regard des aiguilles périphériques et de dépressions entre deux des dites aiguilles périphériques.

Une telle filière présentera donc une section en forme de "marguerite" pour la réalisation d'une membrane cylindrique, ou comportera deux faces longitudinales parallèles ondulées pour la réalisation d'une membrane plane.

L'utilisation d'une telle filière permet de mieux maitriser le paramètre correspondant à la distance maximale à parcourir par le fluide précipitant et par conséquent de parvenir plus facilement à un bon compromis précipitation totale - étirement contrôlé.

L'invention sera mieux comprise à la lecture de la description détaillée qui suit en référence aux dessins annexés qui en représentent à titre d'exemple non limitatif un mode de mise en oeuvre préférentiel. Sur ces dessins qui font partie intégrante de la présente description :

- la figure 1 est un schéma synoptique illustrant un processus de fabrication conforme à l'invention,

- la figure 2 est une vue schématique de face de la filière utilisée dans l'exemple de mise en oeuvre décrit dans cette description.

La solution polymérique obtenue par dissolution d'un matériau polymérique dans un solvant est initialement stockée dans un réservoir 1. Parallèlement, un fluide de centrage est stocké dans un réservoir 2. Ce fluide de centrage est un fluide non solvant à l'égard du polymère et apte à précipiter la solution polymérique.

Chacun de ces réservoirs 1,2 est raccordé à une filière 3 au moyen de canalisations 4, 5 d'alimentation agencées pour que le fluide de centrage s'écoule à l'intérieur des aiguilles de cette filière 3 et la solution polymérique à l'extérieur des dites aiguilles.

La filière 3 comporte des aiguilles de formes conjuguées de celles des canaux de la membrane à réaliser et de dimensions externes comprises entre 0,7 fois et 1,2 fois celles des dits canaux. Elle comporte en outre un orifice d'extrusion de forme conjuguée de celle de l'extrudat, c'est-à-dire de forme cylindrique pour la réalisation d'une membrane cylindrique ou de forme rectangulaire de faible largeur par rapport à sa longueur pour la réalisation d'une membrane plane. Les dimensions internes de cet orifice d'extrusion sont comprises entre 0,8 fois et 1,2 fois celles de la membrane à fabriquer.

Par ailleurs, chacune des canalisations est dotée d'une pompe de circulation 6, d'un filtre 7 et d'un échangeur de chaleur 8 adapté pour maintenir constante la température de fluide et de solution.

A l'aplomb de cette filière 3, disposée de façon à extruder la solution sensiblement verticalement, se trouve un bac de récupération 9 rempli d'un liquide non solvant à l'égard du polymère et apte à précipiter la solution polymérique. Le bac de récupération 9 se trouve à une distance de la filière 3, telle que l'extrudat parcoure une distance da avant d'atteindre la surface du liquide.

Dans le fond de ce bac 9, est, en outre, disposée une poulie de renvoi 10 permettant de guider, par l'intermédiaire d'une autre poulie de renvoi 11, la membrane vers une bobineuse 12.

La vitesse linéaire d'envidage Ve de cette bobineuse 12 est réglée en fonction de la vitesse moyenne d'extrusion Vs en sortie de filière 3, de façon que Ve/Ws<1,2. La première poulie de renvoi 10 est quant à elle disposée dans le bac de récupération 9 à une profondeur telle que l'extrudat parcoure verticalement une distance de dans le liquide avant de venir en contact avec cette poulie de renvoi.

Un exemple de mise en oeuvre adapté pour fabriquer une membrane plane dotée de sept canaux comportant une couche active à leur surface est décrit ci-dessous.

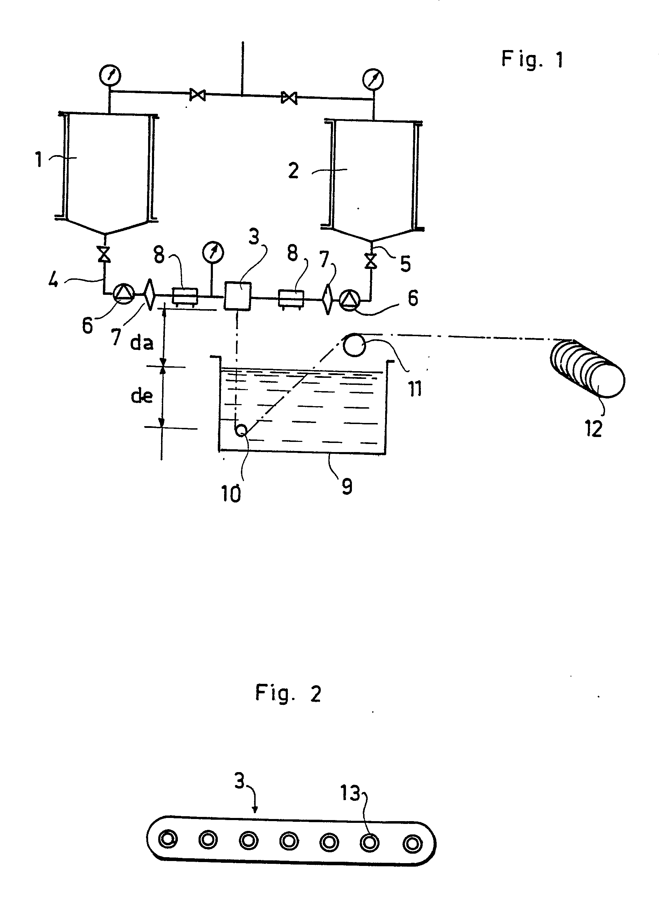

Tel que représenté schématiquement à la figure 2, la filière 3 utilisée présente une section sensiblement rectangulaire dont l'orifice d'extrusion comporte une longueur linéaire de 12,8 mm et une largeur de 2 mm. A l'intérieur de cette filière 3, sont disposées sept aiguilles 13 de diamètre externe 0,81 mm et de diamètre interne 0,51 mm. La distance séparant deux aiguilles 13 est en outre de 0,89 mm.

Avec une telle filière, on constate que la distance maximale à parcourir par le fluide précipitant pour parvenir à la surface de l'extrudat est de l'ordre de 1 mm.

Par ailleurs, le bac de récupération 9 est placé sous la filière 3 de façon que la distance da soit de 62 cm, tandis que la poulie de renvoi 10 est disposée dans ce bac 9 à une profondeur telle que de = 28 cm.

La solution polymérique utilisée présente la composition suivante (% massique) :
- Polyéthérimide "ULTEM 1000" en granulés de "Général Electric-Plastics" : 18 %
- Polyéthylène glycol 400
(400 étant la masse molaire moyenne) : 22 %
- N Méthylpyrrolidone : 60 %

A la température d'extrusion de 30 °C, cette solution présente une viscosité de 5 400 m.pa.s mesurée avec un rhéomat 115 de contraves, à un taux de cisaillement de 28 $s^{-1}$. En outre, elles est extrudée avec un débit Qs = 211 $cm^3$/mn.

Le fluide de centrage utilisé est de l'eau que est introduite dans les aiguilles 13 avec un débit Qf = 138 $cm^3$/mn.

En dernier lieu, la bobineuse 9 est règlée de façon que la vitesse linéaire d'envidage Ve soit de 10,0 m/mn.

Dans ces conditions, le produit obtenu est une membrane comportant 7 canaux dotés chacun d'une couche active à leur surface, et une épaisseur intermédiaire de porosité supérieure à celle des dites couches actives.

Cette membrane présente une largeur de 12 mm et une épaisseur de 1,9 mm, le diamètre interne de chacun des canaux étant de 0,95 mm. Enfin, la valeur de la perméabilité hydraulique, mesurée en introduisant un liquide dans les canaux, est de $5,6\ 10^{-10}$ m/s.pa pour de l'eau à 25°C et un $\Delta p$ de $0,1.10^5$ Pa à $1.10^5$ Pa.

## Revendications

1) Procédé pour la fabrication d'un matériau poreux organique, notamment d'une membrane semi-perméable organique, du type consistant à dissoudre un polymère dans un solvant, à extruder la solution ainsi obtenue au travers d'une filière 3 dotée d'une pluralité de conduits (13) séparés à l'intérieur desquels on introduit au moins un fluide, dit de centrage, et à l'extérieur desquels on fait s'écouler la solution de façon à former un extrudat doté d'une pluralité de canaux longitudinaux, et à précipiter cet extrudat, le dit procédé étant caractérisé en ce que :

- on utilise une filière (3) comportant, d'une part, des aiguilles (13) de formes conjuguées de celles des canaux et de dimensions externes comprises entre 0,7 fois et 1,2 fois celles desdits canaux et, d'autre part, un orifice d'extrusion de forme conjuguée de celle de l'extrudat et de dimensions internes comprises entre 0,8 fois et 1,2 fois celles dudit extrudat,

- on dispose la filière (3) de façon à extruder la solution sensiblement verticalement,

- on injecte autour des aiguilles une solution présentant une viscosité supérieure à 500 millipascal seconde ("Contraves, Rhéomat 115, taux de cisaillement de 28 $s^{-1}$) avec un débit adapté de façon à obtenir une vitesse d'extrusion moyenne Vs en sortie de filière,

- on introduit à l'intérieur des conduits de la filière (3) un fluide de centrage non solvant à l'égard du polymère et apte à précipiter la solution polymérique,

- on fait parcourir à l'extrudat en sortie de filière, une distance da dans une atmosphère gazeuse non précipitante à l'égard de la solution polymérique avec da telle que : $500 \times e \leqslant da < 0,8\ m$ , où e représente la distance maximale à parcourir par le fluide précipitant à l'intérieur de l'extrudat pour obtenir la précipitation totale dudit extrudat,

- on recueille l'extrudat dans un bain de liquide non solvant à l'égard du polymère et apte à précipiter la solution polymérique,

- et on envide l'extrudat précipité avec une vitesse d'envidage linéaire Ve telle que Ve/Vs<1,2.

2) Procédé selon la revendication 1 caractérisé en ce que l'on utilise une filière comportant un orifice d'extrusion présentant une surface périmétrique de forme ondulée constituée d'une succession d'ondulations en regard des aiguilles périphériques et de dépressions entre deux des dites aiguilles périphériques.

Fig. 1

Fig. 2

# RAPPORT DE RECHERCHE EUROPEENNE

Office européen
des brevets

Numero de la demande

EP  89 20 3079

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 254 334  (ENIRICERCHE S.P.A.)<br>* revendications 1,6,7; figures 1,2 *<br>--- | 1,2 | B 01 D  69/08<br>D 01 D   5/24 |
| Y | EP-A-0 277 619  (AIR PRODUCTS AND CHEMICALS, INC.)<br>* revendication 1; colonne 2, lignes 47-55 *<br>--- | 1,2 | |
| A | PATENT ABSTRACTS OF JAPAN<br>vol. 6, no. 197 (C-128)(1075), 6 Octobre 1982; & JP - A - 57 106709 (TANAKA KIKINZOKU KOGYO K.K.) 02-07-1982 * abrégé *<br>--- | 1,2 | |
| D,A | DE-A-3 022 313  (NIPPON ZEON CO. LTD.)<br>* revendications 5-9 *<br>--- | 1,2 | |
| D,A | WO-A-8 102 750  (BAXTER TRAVENOL LABORATORIES, INC.)<br>* revendications 1,5 *<br>----- | 1,2 | DOMAINES TECHNIQUES RECHERCHES (Int. Cl.5)<br><br>D 01 D |

Le présent rapport a été établi pour toutes les revendications

| Lieu de la recherche | Date d'achèvement de la recherche | Examinateur |
|---|---|---|
| BERLIN | 20-02-1990 | CORDERO ALVAREZ M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
·······································································································
& : membre de la même famille, document correspondant

EPO FORM 1503 03.82 (P0402)